# EUROPÄISCHE PATENTANMELDUNG

(11) **EP 1 201 924 A2**
(43) Veröffentlichungstag der Anmeldung: **02.05.2002**
(21) Anmeldenummer: 01102859.4
(22) Anmeldetag: 14.02.2001
(51) Int. Cl.: F03G 3/00

(54) **Schwerkraftanlage-Stromerzeugung mittels Gewichtsdruck**

(30) Priorität: 24.10.2000 EP 00203664; 24.01.2001 EP 01101173; 08.02.2001 EP 01102745
(71) Anmelder: Hartmann, Konstantin, 70378 Stuttgart (DE)
(72) Erfinder: Hartmann, Konstantin, 70378 Stuttgart (DE)

(57) **Zusammenfassung**

Schwerkraftanlage - Stromerzeugung mittels Gewichtsdruck durch: einen Zylinder, Schwergewichte, Vierecken, Stahlkreisen, Stahlwellen, Zahnräder, Zahnwellen und Generatoren.

Die Stahlkreisen kommen vom Schwergewicht und vom Gewicht der Schienen, durch: den Zylinder, Vierecken, Stahlwellen, Zahnräder, Zahnwellen in Drehung, dadurch drehen die Stahlkreisen, durch die Zahnwellen die Generatoren.

## Beschreibung

Schwerkraftanlage-Stromerzeugung mittels Gewichtsdruck durch: einen Zylinder, Schwergewichte, Vierecken 1 und 2: ABCD, FGIK, EPUT und MNLW, 8 Stahlkreisen, Stahlwellen, Zahnräder, Zahnwellen und Generatoren.

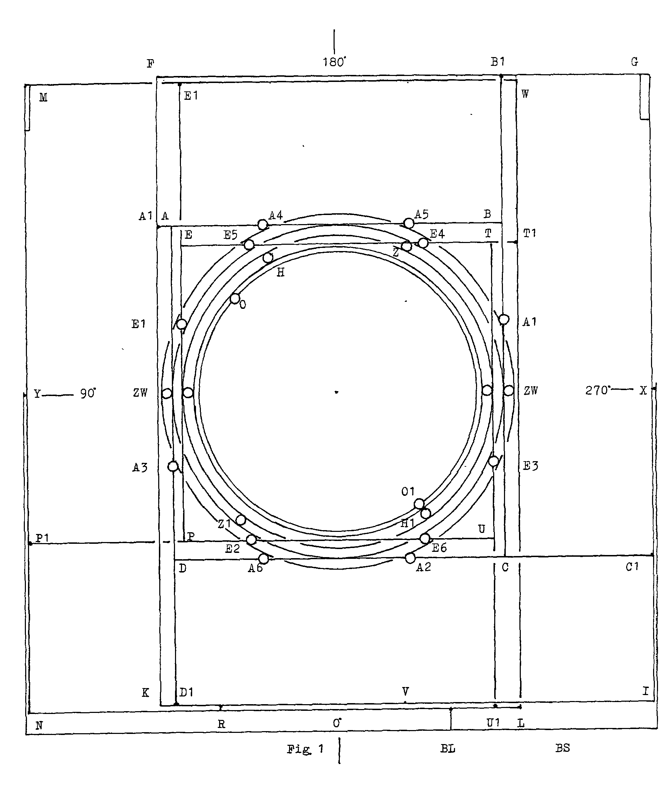

Es zeigt Fig. 1 und wird im folgenden näher beschrieben.

Der Zylinder, 9,4m Durchmesser, 10m Länge, die Stahlkreisen 5,1 und 2 sind: stabil durch zwei Stahlwellen verbunden und bilden den Zylinder.

Auf den Stahlwellen drehen sich die Zahnräder O und O1, auf jeder Stahlwelle drehen sich zwei Zahnräder.

Die Vierecken ABCD, 1 und 2 sind stabil durch sechs 10m langen Stahlwellen A verbunden.

An die Vierecken 1 und 2 sind stabil die Eckseiten A1A, B1B, C1C, D1D und an die Eckseiten sind die Lager A1, B1, C1 und D1 angebracht.

Das Gewicht der Schienen drückt durch die Ecken B.

Auf den Stahlwellen: A1, A2, A3, A4, A5 und A6 drehen sich die Zahnräder A, auf jeder Stahlwelle drehen sich zwei Zahnräder A.

Die Vierecken FGIK, 1 und 2 sind drehbar durch 10m langen Schienen: GG1, II1 und VV1 verbunden.

An die Vierecken 1 und 2 sind: an die Ecken G, das Schwergewicht und an die Viereck Seiten GI, in der Schienenmitte, die Lager X angebracht.

Das Gewicht der Schienen drückt durch die Viereck Seiten: FG und KI.

Die Vierecken EPUT, 1 und 2 sind stabil durch sechs Stahlwellen verbunden.

An die Vierecken 1 und 2 sind stabil die Eckseiten E1E, P1P, U1U, T1T und an die Eckseiten sind die Lager: E1, P1, U1 und T1 angebracht.

Das Gewicht der Schienen drückt durch die Ecken E.

Auf den Stahlwellen: E1, E2, E3, E4, E5 und E6 drehen sich die Zahnräder E, auf jeder Stahlwelle drehen sich zwei Zahnräder E.

Die Vierecken MNLW, 1 und 2 sind drehbar durch 10m langen Schienen: MM1, NN1 und RR1 verbunden.

An die Vierecken 1 und 2 sind: die Lager R, an die Ecken M, das Schwergewicht und an die Viereck Seiten MN in der Schienenmitte sind die Lager Y angebracht.

Das Gewicht der Schienen drückt durch die Viereck Seiten: MW und NL.

Die 8 Stahlkreisen haben auf der Außenseite und auf der Innenseite Zahnoberfläche.

Das Gewicht der Schienen drückt durch die Stahlkreisen.

Die Zahnwellen Z, Z1, H und H1 drehen sich durch die Stahlkreisen.

Die vier Zahnwellen, an jede Zahnwelle sind, zwei Generatoren angebracht.

Die Zahnwellen drehen sich auf Lager und drehen die Generatoren.

Die acht Generatoren sind stabil durch Schienen an die Viereck Seiten: EP, 1 und 2 und BC, 1 und 2 angebracht.

Das Gewicht der Schienen und der Generatoren drückt durch die Ecken E und B.

Die Vierecken: MNLW, 1 und 2 und FGIK, 1 und 2 stützen sich in der Zylinderhöhe 90° durch die Lager X und Y, auf die Bodenschienen, dadurch bleiben die Vierecken 1 und 2 und der Zylinder in der stabilen Lage.

Die Zahnwellen, die Zahnräder und die Stahlkreisen drücken, ziehen und drehen durch die Zahnoberfläche.

Die Vierecken FGIK, 1 und 2 drücken: auf die Lager R und auf die Ecken G drückt das Schwergewicht, dadurch drücken die Vierecken 1 und 2 drehbar: auf die Lager A1, B1, C1, das Schwergewicht und das Gewicht der Schienen drücken durch die Viereck Seiten K1 als Hebel: auf die Lager R und durch die Lager D1, gegen das Gewicht der Schienen, längst der Eckseiten D1D, auf die Ecken D, dadurch drücken die Ecken D: durch die Stahlwellen A3 und A6 durch die Zahnräder A, längst der Stahlkreisen 1, 1 und 2 und ziehen durch die Stahlwelle A2 und die Lager C1 drücken durch die Stahlwelle A2, durch die Zahnräder A, längst der Stahlkreisen 1.

Das Schwergewicht und das Gewicht der Schienen drücken durch die Viereck Seiten FG, auf die Lager B1, dadurch ziehen die Viereck Seiten FG: die Viereck Seiten KF und drücken durch die Lager B1, längst der Eckseiten B1B, auf die Ecken B und das Gewicht der Schienen drückt durch die Ecken B: durch die Stahlwelle A1, durch die Zahnräder A1, längst der Stahlkreisen 1, 1 und 2, durch die Stahlwelle A5, durch die Zahnräder A5: auf die Stahlkreisen 1 und längst der Stahlkreisen 1 und ziehen durch die Stahlwelle A4 und die Lager A1 drücken durch die Stahlwelle A4, durch die Zahnräder A, längst der Stahlkreisen 1.

Die Vierecken MNLW, 1 und 2 drücken auf die Bodenlager und auf die Ecken M drückt das Schwergewicht, dadurch drücken die Vierecken 1 und 2 drehbar: auf die Lager E1, P1, T1.

Das Gewicht der Schienen und die Lager R drücken durch die Viereck Seiten NL, dadurch drücken die Viereck Seiten NL, als Hebel: auf die Bodenlager und durch die Lager U1, gegen das Gewicht der Schienen, längst der Eckseiten U1U, auf die Ecken U, dadurch drücken die Ecken U: durch die Stahlwellen E3 und E6 durch die Zahnräder E, längst der Stahlkreisen 2, 1 und 2 und ziehen durch die Stahlwelle E2
und die Lager P1 drücken durch die Stahlwelle E2, durch die Zahnräder E, längst der Stahlkreisen 2.

Das Schwergewicht und das Gewicht der Schienen drücken durch die Viereck Seiten MW, auf die Lager E1, dadurch ziehen die Viereck Seiten MW: die Viereck Seiten WL und drücken durch die Lager E1, längst der Eckseiten E1E, auf die Ecken E und das Gewicht der Schienen drückt durch die Ecken E: durch die Stahlwelle E1, durch die Zahnräder E1, längst der Stahlkreisen 2, durch die Stahlwelle E5 durch die Zahnräder E5:
auf die Stahlkreisen 2 und längst der Stahlkreisen 2 und ziehen durch die Stahlwelle E4 und die Lager T1 drücken durch die Stahlwelle E4, längst der Stahlkreisen 2.

Auf die Stahlwelle A5 drücken die Ecken B, dadurch drücken die Zahnräder A5, auf die zwei Stahlkreisen 1.

Auf die Stahlwelle E5 drücken, die Ecken E, dadurch drücken die Zahnräder E5, auf die zwei Stahlkreisen 2.

Auf die Zahnwelle Z, drücken die zwei Stahlkreisen 2, dadurch drückt die Zahnwelle Z, auf die zwei Stahlkreisen 3.

Auf die Zahnwelle H, drücken die zwei Stahlkreisen 3, dadurch drückt die Zahnwelle H, auf die zwei Stahlkreisen 4.

Der Zylinder und die Stahlkreisen 4 und 3 drücken durch die Zahnräder O1, durch die Zahnwellen H1 und Z1 auf die Stahlkreisen 3 und 2.

Die Stahlkreisen 1, 1 und 2 drücken auf die Zahnräder E5 und auf die zwei Stahlkreisen 1 drücken: die Zahnräder A5 und das Gewicht der Schienen, dadurch ziehen, drücken und drehen die zwei Stahlkreisen 1: ziehen die Zahnwelle 1, drücken auf die Zahnwelle 4 und drehen: sich auf den Zahnräder E und drehen die Zahnräder A.

Die zwei Stahlkreisen 1 drücken auf die Zahnräder A2 und auf die zwei Stahlkreisen 1 drücken: die Zahnräder A6 und das Gewicht der Schienen, dadurch ziehen, drücken und drehen die zwei Stahlkreisen 1: ziehen die Zahnwelle 4, drücken auf die Zahnwelle 1 und drehen: sich auf den Zahnräder E und drehen die Zahnräder A.

Die zwei Stahlkreisen 1 drücken: auf die Zahnräder E5 und A2, dadurch drücken und ziehen die Zahnräder: E5, auf die zwei Stahlkreisen 2, die Zahnräder A2 ziehen: durch die Stahlwelle A2, durch die Ecken C, die Stahlwelle A1.

Die Stahlwellen A drücken durch die Zahnräder A, längst der zwei Stahlkreisen 1 und die Stahlkreisen 1 drehen die Zahnräder A, dadurch drehen die Stahlkreisen 1 und die Zahnräder A, durch die zwei Stahlkreisen 1, die Zahnwellen 1 und 4 in Drehrichtung.

Die Stahlkreisen 2, 1 und 2 drücken, auf die Zahnwelle Z und auf die zwei Stahlkreisen 2 drücken: die Zahnräder E5 und das Gewicht der Schienen, dadurch ziehen, drücken und drehen die Stahlkreisen 2: ziehen die Zahnwelle 4, drücken auf die Zahnwelle 1 und drehen: sich auf den Zahnräder E und drehen die Zahnräder E.

Die zwei Stahlkreisen 2 drücken auf die Zahnräder E2 und auf die zwei Stahlkreisen 2 drücken: die Zahnräder E6, die Zahnwelle Z1 und das Gewicht der Schienen, dadurch ziehen, drücken und drehen die zwei Stahlkreisen 2: ziehen die Zahnwelle 1, drücken auf die Zahnwelle 4, und drehen: sich auf den Zahnräder E und drehen die Zahnräder E.

Die zwei Stahlkreisen 2 drücken: auf die Zahnwelle Z und auf die Zahnräder E2, dadurch drücken und ziehen: die Zahnwelle Z, auf die zwei Stahlkreisen 3 und die Zahnräder E2 ziehen durch die Stahlwelle E2, durch die Ecken P die Stahlwelle E1.

Die Stahlwellen E drücken durch die Zahnräder E, längst der Stahlkreisen 2 und die Stahlkreisen 2 drehen die Zahnräder E, dadurch drehen: die Stahlkreisen 2 und die Zahnräder E, durch die zwei Stahlkreisen 2, die Zahnwellen 1 und 4, in entgegengesetzter Richtung.

Die zwei Stahlkreisen 1 drehen in Drehrichtung und die zwei Stahlkreisen 2 drehen in entgegengesetzter Richtung, die Zahnwellen 1 und 4, dadurch drehen die Zahnwellen 1 und 4: sich auf den Lager und drehen die Generatoren: 1, 1 und 2 und 4, 1 und 2.

Die Stahlkreisen 3, 1 und 2 drücken auf die Zahnwelle H und auf die zwei Stahlkreisen 3 drücken: die Zahnwelle Z und das Gewicht der Schienen, dadurch ziehen, drücken und drehen die zwei Stahlkreisen 3: ziehen die Zahnwelle 2, drücken auf die Zahnwelle 3 und drehen: sich auf den Zahnwellen Z und Z1 und drehen die Zahnwellen 2 und 3 in Drehrichtung.

Die zwei Stahlkreisen 3 drücken auf die Zahnwelle Z1 und auf die zwei Stahlkreisen 3 drücken: die Zahnwelle H1 und das Gewicht der Schienen, dadurch ziehen, drücken und drehen die zwei Stahlkreisen 3: ziehen die Zahnwelle 3, drücken auf die Zahnwelle 2 und drehen die Zahnwellen 2 und 3 in Drehrichtung.

Die zwei Stahlkreisen 3 drücken: durch die Zahnwelle H, auf die zwei Stahlkreisen 4 und durch die Zahnwelle Z1, auf die zwei Stahlkreisen 2.

Die Stahlkreisen 4, 1 und 2 drücken, auf die Zahnwelle H1 und auf die zwei Stahlkreisen 4 drücken: die Zahnwelle H und das Gewicht der Schienen, dadurch ziehen, drücken und drehen die zwei Stahlkreisen 4: ziehen die Zahnwelle 3, drücken: auf die Zahnwelle 2 und auf die Zahnräder O und drehen: sich auf den Zahnwellen H und H1 und drehen die Zahnräder O und O1.

Die zwei Stahlkreisen 4 drücken: durch die Zahnräder O, durch die Stahlwelle O, auf den Zylinder.

Der Zylinder drückt durch die Zahnräder O1, durch die Stahlkreisen 4, auf die Zahnwelle H1 und auf den Zylinder drücken: die Zahnräder O und das Zylindergewicht, dadurch drückt der Zylinder: durch die Stahlwellen O und O1, durch die Zahnräder O und O1, längst der Stahlkreisen 4 und die Stahlkreisen 4 drehen die Zahnräder O und O1, dadurch drehen die Stahlkreisen 4 und die Zahnräder O und 01, durch die Stahlkreisen 4, die Zahnwellen 2 und 3 in entgegengesetzter Richtung.

Die zwei Stahlkreisen 3 drehen in Drehrichtung und die zwei Stahlkreisen 4 drehen in entgegengesetzter Richtung, die Zahnwellen 2 und 3, dadurch drehen die Zahnwellen 2 und 3: sich auf den Lager und drehen die Generatoren: 2, 1 und 2 und 3, 1 und 2.

## Patentansprüche

1. Schwerkraftanlage-Stromerzeugung mittels Gewichtsdruck durch: einen Zylinder, Schwergewichte, Vierecken 1 und 2: FGIK, ABCD, MNLW, EPUT, Stahlkreisen, Stahlwellen, Zahnräder, Zahnwellen und Generatoren,
**dadurch gekennzeichnet,**
**dass** die Stahlkreisen vom Schwergewicht und vom Gewicht der Schienen durch: den Zylinder, Vierecken, Stahlwellen, Zahnräder und Zahnwellen in Drehung kommen, dadurch drehen die Stahlkreisen durch die Zahnwellen, die Generatoren.

2. Stromerzeugung nach Patentanspruch 1,
**dadurch gekennzeichnet,**
**dass** das Schwergewicht und das Gewicht der Schienen durch die Vierecken FGIK und ABCD durch die Stahlwellen A, durch die Zahnräder A längst der Stahlkreisen 1, 1 und 2 in Drehrichtung drücken.

3. Stromerzeugung nach Patentanspruch 1,
**dadurch gekennzeichnet,**
**dass** das Schwergewicht und das Gewicht der Schienen durch die Vierecken MNLW und EPUT durch die Stahlwellen E, durch die Zahnräder E längst der Stahlkreisen 2, 1 und 2 in entgegengesetzter Richtung drücken.

4. Stromerzeugung nach Patentanspruch 1,
**dadurch gekennzeichnet,**
**dass** die Zahnräder A und das Gewicht der Schienen, längst der zwei Stahlkreisen 1 drücken und die Stahlkreisen 1 und die Zahnräder A, durch die Stahlkreisen 1, drehen die Zahnwellen 1 und 4 in Drehrichtung.

5. Stromerzeugung nach Patentanspruch 1,
**dadurch gekennzeichnet,**
**dass** die Zahnräder E und das Gewicht der Schienen, längst der zwei Stahlkreisen 2 drücken und die Stahlkreisen 2 und die Zahnräder E, durch die Stahlkreisen 2, drehen die Zahnwellen 1 und 4 in entgegengesetzter Richtung.

6. Stromerzeugung nach Patentanspruch 1,
**dadurch gekennzeichnet,**
**dass** die Zahnwellen Z, H1 und das Gewicht der Schienen, längst der zwei Stahlkreisen 3 drücken und die Stahlkreisen 3 drehen sich auf den Zahnwellen Z und Z1 und drehen die Zahnwellen 2 und 3 in Drehrichtung.

7. Stromerzeugung nach Patentanspruch 1,
**dadurch gekennzeichnet,**
**dass** die Zahnwelle H und das Gewicht der Schienen, längst der zwei Stahlkreisen 4 drücken und die Stahlkreisen 4 drehen sich auf den Zahnwellen H und H1 und drehen die Zahnwellen 2 und 3 in entgegengesetzter Richtung.

8. Stromerzeugung nach Patentanspruch 1,
**dadurch gekennzeichnet,**
**dass** die Stahlkreisen: 1 und 2 und 3 und 4, durch die vier Zahnwellen, die Generatoren drehen.
